(19) Europäisches Patentamt
European Patent Office
Office européen des brevets

(11) **EP 1 349 183 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(51) Int Cl.:
*H01F 6/06* (2006.01)   *H01B 12/08* (2006.01)
*H02K 3/14* (2006.01)   *H01B 7/30* (2006.01)

(21) Anmeldenummer: **03001748.7**

(22) Anmeldetag: **28.01.2003**

(54) **Flacher, aus elektrisch leitenden Strängen zusammengesetzter verlustarmer elektrischer Leiter**

Flat low-loss composite electric conductor made of electric conductive strands

Conducteur électrique composite plat à faibles pertes comportant fils conducteurs électriques

(84) Benannte Vertragsstaaten:
**AT BE BG CH CY CZ DE DK EE ES FI FR GB GR HU IE IT LI LU MC NL PT SE SI SK TR**

(30) Priorität: **27.03.2002 DE 10213672**

(43) Veröffentlichungstag der Anmeldung:
**01.10.2003 Patentblatt 2003/40**

(73) Patentinhaber: **Karlsruher Institut für Technologie 76131 Karlsruhe (DE)**

(72) Erfinder: **Klimenko, Evgueni, Prof. Dr. Moscow 123060 (RU)**

(56) Entgegenhaltungen:
DE-A- 19 754 943   DE-C- 478 873
DE-U- 20 002 591   FR-A- 2 104 986

**Beschreibung**

Die Erfindung betrifft einen flachen, aus Strängen zusammengesetzten verlustarmen elektrischen Leiter, der im Bereich normal und supraleitender Wechselstrommaschinen/-geräten, wie Transformatoren, Übertragungsleitungen, supraleitende magnetische Energiespeicher (kurz SMES), Wicklungen von elektrischen Motoren und Generatoren, Beschleunigermagnete und Magnete für den magnetischen Einschluss von Plasmen (Tokamak etc.), eingesetzt wird. Ein Strang selber kann ein einzelner Draht, ein Seil/Litze oder ein Kabel sein.

Der/Das am häufigsten benutzte Kabel, wie der/das vom Rutherford- oder Roebel-Typ besteht aus zwei Stranglagen und hat dadurch mindestens eine Dikke von zwei Strangdurchmessern. Bei diesem Grundaufbau liegt stets ein Strang zwischen zwei und denselben Strängen, die Stränge liegen geordnet/gekämmt zueinander. Die Stränge winden sich um die Längsachse des Leiters. Die Lage des Querschnitts bleibt entlang des gestreckten Leiters unverändert, wie auch die Querschnittsfläche sich nicht ändert. Gerade bei dem zweilagigen Leiter nimmt jeder Strang im Leiterquerschnitt im Verlaufe hinreichender Leiterlänge jede Lage ein, d.h. jeder Strang ändert seine Querschnittsposition entlang des Leiters periodisch. Es gibt auch kompliziertere Strangverlagerungen, jedoch haben die Leiter vom Rutherford- oder Roebel-Typ den besten Füllfaktor. Der Vollständigkeit halber sei erwähnt, dass ein aus Multifilamenten verdrilltes Band ähnliche aber vielschichtigere, mehr als zweilagige Struktur der supraleitenden Filamente hat.

Solche vielstrangigen Leiter beim Einbau in die beispielsweise genannten Maschinen/Geräte führen im elektrischen Betrieb zu einem technischen Problem, nämlich zu materialbelastenden Abschirmströmen. Sie haben schädliche Auswirkungen, wie zusätzliche Energieverluste, nicht voraussehbare Stromverteilung zwischen den Strängen und Instabilitäten bei Supraleitern insbesondere.

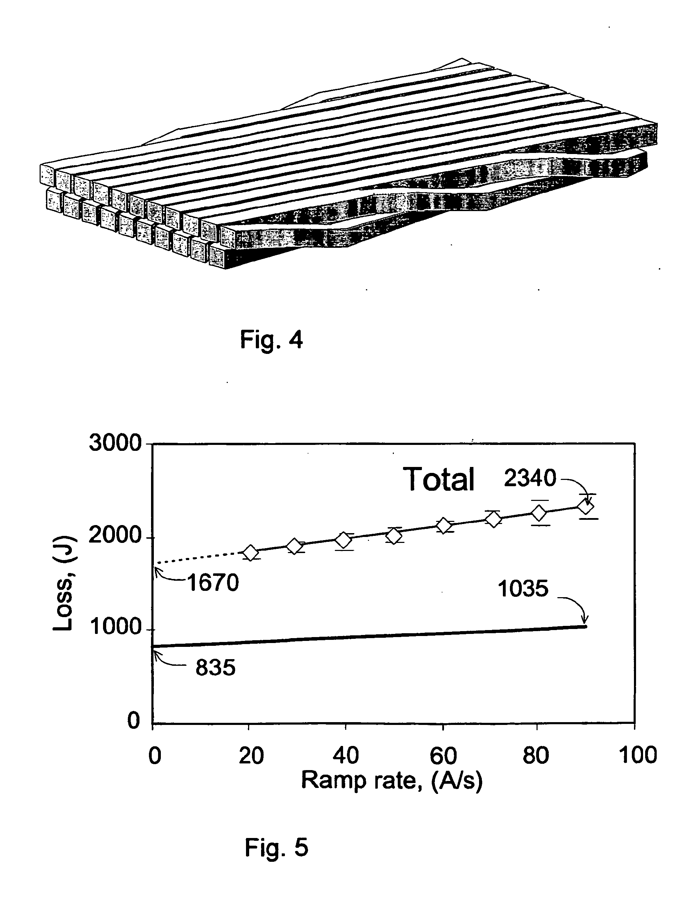

Die Problematik wird kurz an einem Kabel vom Roebel-Typ erläutert. Ein solches Kabel hat einen Aufbau, wie er in Figur 4 schematisch dargestellt ist. Das Kabel hat einen flachen zweilagigen, einfach verseilten Aufbau aus gleichen Strängen, die stets gekämmt - also nicht verdrillt - nebeneinander liegen. Der Füllfaktor ist beim Strang mit recheckigem Querschnitt der höchste unter den Kabeln mit verseilten Strängen. Das Verlagern von Strängen sorgt bis zu einem gewissen Grad für eine einheitliche Stromverteilung zwischen ihnen, verkleinert die Abschirmströme und verringert die Wechselstromverluste in dem Maße, wie die Steigung der Strangwindung verringert wird.

Die DE-A-19754943 zeigt einen Doppel-Roebelstab, bei dem ein Teilleiterpaar so behandelt wird, wie ein einzelner Teilleiter in einem Einfach-Roebelstab.

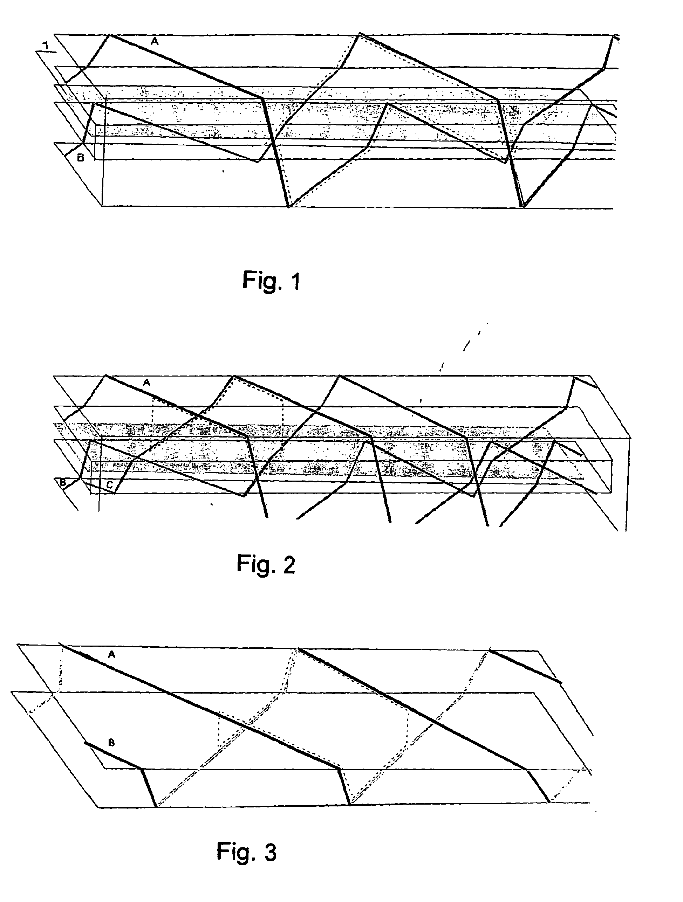

Dennoch, die Abschirmströme und Koppelverluste können nicht auf Null zurückgedrängt werden, es sei denn, man verwendet isolierte Stränge. Nichtisolierte Stränge bilden Stromschleifen innerhalb des Leiters/Kabels durch Kontaktstellen, wie sie in Figur 3 skizziert sind. Genauer betrachtet: ist die Anzahl n an Kontaktstellen nicht geringer als die Anzahl Stränge, die die Schleife bilden. Ein magnetisches Wechselfeld B durch das von der Schleife umfasste Gebiet erzeugt im Schleifenleiter eine Spannung

$$U = S \frac{\partial B}{\partial t}$$

und treibt darin einen Strom

$$I = \frac{S \frac{\partial B}{\partial t}}{n(R_{wire} + R_{contact})}$$

so dass ein Verlust von

$$W = \frac{(S \frac{\partial B}{\partial t})^2}{n(R_{wire} + R_{contact})}$$

entsteht. Die Auswirkung ist besonders hoch bei supraleitenden Kabel, bei denen der Widerstand $R_{wire}$ zwischen den Kontaktstellen der Schleife, also in dem jeweiligen Strangstück null ist. Ihre maximale Länge ist gleich der halben Steigungslänge des Strangs und die Breite ist maximal gleich der Leiterbreite. Diese Schleifen tragen am meisten zu den Koppelverlusten bei, sie bieten die meiste Induktivität L an und bewirken damit die längste Zeit für den Stromabfall, wie aus

$$\tau = \frac{1}{2} L (R_{wire} + R_{contact})$$

ersichtlich ist. Diese Schleifen werden Hauptschleifen genannt.

Im Fall gewöhnlicher Kabel macht die Drahtisolation das Kabel teurer und lässt kein kompaktes Kabel zu. Das kommt für supraleitende Kabel wegen der deswegen dramatischen Abnahme der Kabelstabilität nicht in Frage.

Die Nachteile des zweilagigen Leiters gemäß Figuren 3 und 4 sind: die Koppelverluste sind ziemlich hoch, selbst bei der kleinsten akzeptablen Strang/Drahtwindung; die zeitliche Magnetfeldänderung $\partial B/\partial t$ entlang des supraleitenden Kabels ist nicht einheitlich. Der gewöhnlichste Fall: treten lange Schleifen eines hohen Abschirmstroms auf. Das bewirkt eine nicht gleichmäßige Stromverteilung unter den Strängen, damit eine Verluststeigerung und insbesondere vorzeitigen Übergang des supraleitenden Kabels vom supraleitenden in den normalleitenden Zustand, dem Quench. Dies, weil der Strom in einem beliebigen Strang einen kritischen Wert erreicht, während der Leiterstrom noch unterhalb der höchst zulässigen Stromstärke liegt.

Eine Standardmaßnahme, den Wechselstromverlust in einem solchen Leiter zu verringern, besteht in der Erhöhung des Kontaktwiderstandes $R_{contact}$. Das lässt sich auf zwei Wegen erreichen, nämlich: den Strang mit einer Widerstandslegierung überziehen, und/oder ein Widerstandsband zwischen die Stranglagen legen. Das erhöht jeweils die Herstellungskosten des Leiters. Da der Kontaktwiderstand $R_{contact}$ wegen der Forderung der notwendigen Kabelformstabilität nicht sehr hoch sein kann, sind die Koppelverluste ziemlich hoch. Wegen ihres hohen Wertes, macht die Verwendung moderner Supraleiterdrähte mit niedrigen Eigenverlusten wegen resistiver Barrieren im Innern und sehr dünnen Filamenten keinen Sinn. Ähnliche Nachteile zeigen auch flache Supraleiterbänder aus verdrillten Multifilamentdrähten. Dort gibt es die gleichen Erscheinungen hinsichtlich der Abschirmströme, die entlang der supraleitenden Filamente fließen.

Daraus ergibt sich die Aufgabe, die der Erfindung zugrunde liegt, nämlich:
die Wechselstromverluste, die bei einem solch zweilagigen Leiter mit um sich um die Leiterlängsachse windenden Leitern unvermeidlich entstehen und bestehen, zu unterdrücken oder zumindest deutlich auf ein akzeptables Maß zu begrenzen. Insbesondere bei supraleitenden Flachbändern aus verdrillten Drähten ist das eine immer wieder gestellte Forderung.

Die Aufgabe wird durch die in Anspruch 1 gekennzeichnete Maßnahme gelöst:
Der zunächst zweilagig und vielstrangig gefertigte Leiter wird in einem abschließenden Fertigungsschritt entlang einer Linie auf der Mitte der Breitseite oder entlang einer Linie, die sich auf der Mantelfläche des Leiters um dessen Längsachse windet, gefaltet und zusammengelegt. Nach der Faltung entlang der Linie parallel zur Leiterlängsachse schauen die beiden Schmalseiten des ursprünglich zweilagigen Leiters in die gleiche Richtung. Nach der Faltung entlang einer Linie, die sich um die Leiterlängsachse windet, stoßen diese beiden Schmalseiten aufeinander, sie stehen sich gegenüber. In beiden Faltungsfällen besteht nach der Faltung eine Lagenverdopplung, d.h. die Querschnittsfläche hat sich zwar nicht geändert, jedoch ist der Querschnitt nicht mehr so flach, er ist jetzt wenigstens doppelt so hoch. Das trifft insbesondere auf Leiter zu, die gegenüber ihrer Dicke sehr breit sind. Vor und nach der Faltung bleibt die Lage des Querschnitts entlang des ausgerollten gestreckten Leiters unverändert. Ist die Faltlinie nicht parallel zur Leiterlängsachse, sondern windet sich um diese, muss die Steigung einer vollen Faltlinienwindung mindestens so groß wie zwei volle Strangwindungen, um die Wechselstromverluste deutlich zu reduzieren. Das magnetische Feld mit seinem zur Breitseite des Querschnitts senkrechten Anteil würde vor der Faltung des Leiters die Schleifen einmal durchdringen, was es nach der Faltung zweimal macht, und zwar je in entgegengesetzter Richtung. Je nach Flächenanteil wird dabei bei gleichen Flächen keine Spannung in der Schleife oder bei ungleichen Flächenanteilen auf jeden Fall eine geringere Spannung erzeugt. Nur die schmalen, kleinen Schleifen, die nicht über die Faltung gehen, bleiben unkompensiert. Ihre Zeitkonstante $\tau_1 = L_1/2\ (R_{wire} + R_{contact})$ ist weniger als ein Zehntel derjenigen im ungefalteten Leiter. Deshalb werden die Koppelverluste und Abschirmströme erheblich reduziert. Anders ausgedrückt: der magnetische Fluss tritt frei/ungehindert in das gefaltete Kabel ein und der gefaltete Leiter kann keinen oder keinen nennenswerten Abschirmstrom erzeugen.

In den Unteransprüchen 2 - 6 sind weitere nützliche Maßnahmen aufgeführt:
Grundsätzlich können die Stränge des Leiters normalleitend sein (Anspruch 2). Die Maßnahme der Faltung des Leiters ist aber insbesondere in der Supraleitertechnik von Bedeutung (Anspruch 3). Der einzelne Strang des Leiters ist dort ein einzelner, häufig in einem Träger aus Kupfer eingebetteter Supraleiter oder in den Träger aus Kupfer eingebettete Supraleiterfilamente.

Um die Ausbildung neuer Schleifen durch das Berühren der beiden aufeinander geklappten Flächenhälften des Kabels durch die Faltung zu vermeiden, liegt eine dielektrische Schicht dazwischen. Das kann ein Lack oder eine Folie oder ein Papierstreifen sein (Anspruch 4), wie es aus dem Elektromaschinenbau bekannt ist. Diese Maßnahme beeinträchtigt die Festigkeit des Leiters/Kabels im Einbau in keiner Weise.

Die flachen Leiter, wie in den Figuren 2 und 3 skizziert, werden auch als Leiter vom Rutherfordtyp bezeichnet, wenn die. Leiterstränge runden Querschnitt haben, oder als Leiter vom Roebel-Typ, wenn die Leiterstränge rechteckigen Querschnitt haben (Anspruch 5).

Die Länge der Innenseite des gefalteten Leiters/Kabel-Querschnitts ist wenig kleiner als die Länge der äußeren Seite. Deshalb liegen die Stränge auf der äußeren Seite nicht dicht wenn der/das herkömmliche Leiter/Kabel vom Rutherford oder Roebel-Typ als Ausgangsbasis verwendet wird. Das kommt von der Abnahme des Füllfaktors her. Diese Abnahme wird vermieden, wenn der Ausgangsleiter derartig aufgebaut ist, dass die Stränge auf der zusammen zu legenden Seite lose liegen, d. h. ihre Steigung bezüglich der Leiterlängsachse ist größer als die auf der gegenüberliegenden Seite (Anspruch 6). Allerdings verlangt ein solchermaßen strukturierter Leiter Maßnahmen, die über den herkömmlichen Herstellungsprozess hinausgehen.

Der technische Nutzen des Leiters/Kabel besteht darin: die Abnahme der Koppelverluste lässt die Verwendung von modernen Supraleiterdrähten mit niedrigen Eigenverlusten zu, so dass dadurch der Gesamtverlust beachtlich gesenkt werden kann; die Minimalfläche der Stromschleifen lässt zu, größere Wickelsteigungen als bisher zu zu fertigen.

Ein niederresistives Füllmaterial kann für das Löten der Leiter/Kabel verwendet werden, das für eine hohe Stabilität/Steifigkeit des Leiters/Kabels sorgt.

Der schnelle Abfall der Abschirmströme, die von nicht einheitlichen magnetischen Feldern herrühren, vermeidet das Problem der nichteinheitlichen Stromverteilung zwischen Drähten des Leiters/Kabels und erlaubt einen höheren Nennstrom im Leiter/Kabel bei höherer Stromänderung.

Die Vorteile des Leiters/Kabels sind:

- Verlustreduzierung in elektrotechnischen Maschinen/Baugruppen.
  Dieser Effekt ist der auffälligste bei supraleitenden Baukomponenten, wegen des Kühlleistungsverbrauchs und der einfacheren Bauweise. Aber auch im normalleitenden Elektromaschinenbau, wie Transformatoren und Motoren, tritt diese Wirkung auffällig hervor.
- Verstärkung der Supraleiterstabilität. Diese Wirkung erlaubt das Absenken der Temperaturgrenze und die Verwendung von weniger Supraleiterdrähten in dem Leiter/Kabel und erhöht damit die insgesamte Stromdichte in einer Baukomponente.
- Ein billiges Lot, das kein Silber enthält, kann für das Löten des Supraleiters/Supraleiterkabels verwendet werden.

Im folgenden wird die Erfindung anhand der Zeichnung näher erläutert. Die Zeichnung besteht aus den Figuren 1 bis 5. Sie zeigt im einzelnen:

Figur 1 den gefalteten Leiter mit dem Verlauf zweier Stränge,
Figur 2 den gefalteten Leiter mit gefalteter Hauptschleife,
Figur 3 der nichtgefaltet Leiter mit dem Verlauf zweier Stränge und der Hauptschleifenbildung,
Figur 4 den Leiter vom Roebel-Typ mit rechteckigen Strängen,
Figur 5 den Vergleich des Verlustes im gefalteten mit dem im nicht gefalteten Leiter.

Der im folgenden weiter erläuterte Gegenstand ist wegen seiner hohen Bedeutung in der Supraleitertechnik ein Supraleiter/-kabel. Ein solches ist ein flaches Band aus Filamenten in einer normalleitenden Matrix, das entlag der Mittellinie seiner Breitseite gefaltet ist. Ein solcher/s Leiter/Kabel wird eher bei volumenmäßig kleinen Baukomponenten eingesetzt. Die Bedeutung tritt aber am Leiter des Rutherford- und Roebel-Typs hervor und wird daher daran beschrieben.

Figur 4 zeigt einen Abschnitt des Leiters/Kabels vom Roebel-Typ, es ist aus Strängen rechteckigen Querschnitts aufgebaut. Der Strang selber kann ein in seiner Seele mit Kühlmittel durchströmbares, supraleitendes Kabel sein, das selbst in einer komplexen Wickeltechnik hergestellt wurde. Die Stränge des Leiters aus Figur 4 laufen stets geneigt zur Längsachse des Leiters. Die Stränge liegen gekämmt, d.h. sie liegen immer gleich benachbart nebeneinander, nicht jedoch übereinander, wie die Lagendarstellung in Figur 4 zeigt und am Rand ersichtlich ist, wenn der jeweilige Strang in der oberen Lage vorne an die Seite kommt, gebogen wird und in der unteren gegengeneigt weiterläuft. Die Stränge der einen Lage kreuzen die der andern.

In Figur 3 ist das zweilagige Leiterstück mit dem repräsentativen Verlauf zweier Stränge A und B dargestellt. Die beiden Stränge bilden durch ihre beiden Berührpunkte, dort, wo sie sich kreuzen die gestrichelt eingetragen Hauptschleife. Der eine Strang A kommt von der oberen Lage aus dem linken hinteren Eck und verläuft schräg gerade nach rechts vorne bis er an die vordere Schmalseite trifft, knickt dort schräg nach unten entsprechend seiner Steigung um die Leiterlängsachse ab, um an der Unterkante wiederum abzuknicken und dann in der unteren Lage schräg gerade nach rechts hinten bis zur Unterkante der hinteren Schmalseite zu laufen. Dort knickt der Strang A dann entsprechend nach oben ab, knickt an der oberen Kante in die obere Lage ab und verläuft so, wie zu Beginn beschrieben, wieder weiter. Der andere, nicht notwendigerweise benachbarte Strang B verläuft auf der Leiterlängsachse ortsversetzt gleich.

Der Strang A kreuzt und berührt dort den Strang. Das geschieht pro Strangwindungsperiode zweimal, wodurch die gestrichelte Hauptschleife zustande kommt. Die umfasste Fläche einer solchen Schleife ist bei Durchsetzung derselben mit einem zeitlich veränderlichen magnetischen Fluss $\partial B/\partial t$ maßgeblich für die Erzeugung der induzierten Spannung in der Schleife und damit für das Treiben eines Stromes in den Stranganteilen darin.

Unmittelbar benachbarte Stränge bilden, von der Windung abhängig, periodisch eine kleinste umfasste Fläche, weiter auseinander liegende eine entsprechend größere. Diese eingeschlossene, entlang des ausreichend langen Leiters periodisch auftretenden Fläche ist am größten, wenn sich zwei Stränge nahe der Leiterlängsachse kreuzen.

Bei der zweilagigen, um die Leiterlängsachse gewundenen Stranganordnung durchdringt die senkrechte Komponente eines im dortigen Bereiches wirksamen Magnetfelds eine solche Schleife einmal und trägt daher bei zeitlicher Änderung empfindlich zur in der Schleife induzierten Spannung U bei. Wird der Leiter längs der Mittellinie einer seiner beiden Breitseiten aufeinander geklappt und wird dadurch vierlagig (siehe Figur 1 und 2), durchdringt ein solches Magnetfeld den Flächenanteil der Schleife auf der einen Hälfte als auch auf der andern. Die beiden Flächenteile werden aber gegensinnig durchdrungen und damit ist für die Erzeugung einer in der betrachteten Schleife induzierten Spannung nur noch die Flächendifferenz maßgebend. Bei Teilflächensymmetrie ist sie null. Die maximale Schleifenfläche des gefalteten Leiters ist um den Faktor 4 kleiner als die Schleifenfläche des ungefalteten Leiters.

Um die Wirksamkeit der Leiter-/Kabelfaltung zu demonstrieren, wird der/das gefaltete Leiter/Kabel mit dem nichtgefalteten gleichen Bauart verglichen. Das nichtgefaltete Kabel wurde im CERN in Form einer Windung eines supraleitenden Dipols getestet. Das Kabel hatte 23 Drähte/Stränge in einer Kupfermatrix mit 1 mm Strangdurchmesser mit je 1700 supraleitenden Filamenten mit einem Filamentdurchmesser von 12 um. Die Stränge waren mit einem resistiven Sn-Pb-Ag-Lot beschichtet. Figur 5 zeigt den Gesamtverlust in Joule (Kurve mit Rhomben) über der Rate der Dipolstromerhöhung. B ei der Stromrate von 90 A/s ist der Gesamtverlust um den Faktor 1,5 größer ist als der hysteretische (Wert bei null).

Um den Vergleich richtig durchzuführen, wurde das gefaltete Kabel derselben Außenmaße am Dipol mit dem selben Strom betrieben. Das Kabel war vom selben Aufbau, die Drähte/Stränge waren auf 0,5 mm Durchmesser gezogen und hatte 90 Stränge. Um die Koppelverluste zu vergleichen, muss die Anzahl und die umschlossenen Fläche der Hauptschleifen und die Zahl und der Widerstand der Kontaktstellen in jeder Hauptschleife in Betracht gezogen werden.

Da die Breite des gefalteten Kabels gleich der des nicht gefalteten Kabels ist, sind die Flächen der Hauptschleifen bei den verglichenen Kabeln gleich. Die Hauptschleife des gefalteten Kabels ist in Figur 2 gestrichelt eingezeichnet. Die Zahl der Schleifen ist 4 mal mehr im gefalteten Kabel, $N_f/N_{unf} = 4$.

Wichtig ist, die Gegeninduktivität der parallelen Paare an Schleifen in den verschiedenen Flügeln des gefalteten Kabels beim Berechnen der in einer Schleife im Wechselfeld erzeugten Spannung. Wenn die Kopplung zwischen den Schleifen ideal wäre, wäre die Spannung in einer Schleife des gefalteten Kabels um den Faktor 2 geringer als in der des nichtgefalteten. Hier wurde der Faktor 1,5 genommen, $U_{unf}/U_f = 1,5$. Die Zahl der Kontaktsstellen in einer Schleife des gefalteten Kabels ist zu der im nicht gefalteten wie 3 : 2, $N_f/N_{unf} = 1,5$. Der Widerstand jeder Kontaktstelle im gefalteten Kabel ist 4 mal größer als im nicht gefalteten, wie beim Strang/Draht mit halbem Durchmesser, $R_f/R_{unf} = 4$. Das bedeutet, das Verhältnis der Verluste: gefaltetes zu nicht gefaltetem Kabel ist

$$\frac{W_f}{W_{unf}} = \left(\frac{U_f}{U_{unf}}\right)^2 * \frac{R_{unf} n_{unf} N_f}{R_f n_f N_{unf}} = 0{,}296$$

Da der Durchmesser der Stränge/Drähte im gefalteten Kabel halb so groß ist wie im nicht gefalteten ist, sind auch die hysteretischen Verluste halb so groß. Die ansteigende Kurve mit den Rhomben zeigt die experimentellen Punkte für das nicht gefaltete Kabel. Die berechneten Verluste des gefalteten Kabels sind im Schaubild durch die drunter liegende, dick gezogene Kurve dargestellt.

**Patentansprüche**

1. Flacher, aus elektrisch leitenden Strängen zusammengesetzter verlustarmer elektrischer Leiter, der zunächst einen mindest zweilagigen Grundaufbau hat, wobei:

   ein Strang stets zwischen zwei und denselben Strängen liegt,
   sich die Stränge um die Längsachse des Leiters winden, so dass die Querschnittsfläche des Leiters gleich bleibt und ihre Lage entlang des gestreckten Leiters nicht ändert, wobei jeder Strang über die Leiterlänge seine Position im Querschnitt periodisch ändert,
   **dadurch gekennzeichnet,**
   **dass** der zunächst mindestens zweilagige Leiter nach einem abschließenden Fertigungsschritt entlang einer Linie auf der Mitte der Breitseite
   oder
   entlang einer Linie, die sich auf der Mantelfläche des noch nicht gefalteten Leiters um seine Längsachse während einer Strangwindung höchstens einmal windet, gefaltet und zusammengelegt ist, und zwar unter Wahrung der Lage des jetzt mindestens vierlagigen Leiterquerschnitts über die Leiterlänge.

2. Elektrischer Leiter nach Anspruch 1, **dadurch gekennzeichnet, dass** die Stränge elektrisch normalleitend sind.

3. Elektrischer Leiter nach Anspruch 1, **dadurch gekennzeichnet, dass** die Stränge supraleitend sind.

4. Elektrischer Leiter nach einem der Ansprüche 2 und 3, **dadurch gekennzeichnet, dass** zwischen den aufeinandergeklappten Hälften des Leiters eine dielektrische Schicht zur elektrischen Isolation liegt.

5. Elektrischer Leiter nach Anspruch 4, **dadurch gekennzeichnet, dass** der Leiter in seinem Grundaufbau ein Rutherford- oder Roebel-Kabel ist.

6. Elektrischer Leiter nach Anspruch 5, **dadurch gekennzeichnet**, die Winkel zwischen der Achse des ungefalteten Leiters/Kabel und einer Strangachse auf gegenüberliegenden Seite des Leiters verschieden ist, derart, dass die Stränge auf der inneren Faltseite einen grö0ßeren Abstand haben als die auf der äußeren Faltseite.

## Claims

**1.** Flat, low-loss electrical conductor composed of electrically conductive strands, which initially has a basic structure formed of at least two layers, wherein:

one strand is always located between the same two strands, the strands coil around the longitudinal axis of the conductor so that the crosssectional area of the conductor remains constant and the position thereof does not change along the stretched conductor, wherein the position of each strand in the cross-section changes periodically along the length of the conductor, **characterised in that**, after a final manufacturing step, the conductor which is initially formed of at least two layers is folded and laid on itself along a line in the middle of the broad side or along a line which on the outer surface of the not yet folded conductor coils around the longitudinal axis thereof no more than once during a strand turn, namely while preserving the position of the conductor cross-section, which is now formed of at least four layers, along the length of the conductor.

**2.** Electrical conductor according to claim 1, **characterised in that** the strands are normally electrically conductive.

**3.** Electrical conductor according to claim 1, **characterised in that** the strands are superconductive.

**4.** Electrical conductor according to one of claims 2 and 3, **characterised in that** a dielectric layer is located for electrical insulation purposes between the folded-together halves of the conductor.

**5.** Electrical conductor according to claim 4, **characterised in that** the conductor in its basic structure is a Rutherford or Roebel cable.

**6.** Electrical conductor according to claim 5, **characterised in that** the angle between the axis of the unfolded conductor/cable and a strand axis is different on opposite sides of the conductor, so that the strands on the inside of the fold are at a greater spacing than those on the outside of the fold.

## Revendications

**1.** Conducteur électrique plat à faibles pertes électriques, composé de brins électroconducteurs, ayant une structure de base à au moins deux couches, et dans lequel :

- un brin est toujours situé entre deux brins identiques,
- les brins étant torses autour de l'axe longitudinal du conducteur de façon que la section du conducteur reste constante et que leur position le long du conducteur allongé ne change pas, chaque brin variant de manière périodique en section, sa position suivant la longueur du conducteur,

conducteur électrique **caractérisé en ce que** le conducteur ayant tout d'abord au moins deux couches après une étape de fabrication terminale, tourne le long d'une ligne passant au milieu du grand côté,

ou

le long d'une ligne qui tourne sur la surface longitudinale du conducteur non encore plié, au moins une fois autour de son axe longitudinal pendant une torsion du brin pour être plié et replié cela en conservant la position de la section du conducteur qui est alors à au moins quatre couches, sur la longueur du conducteur.

**2.** Conducteur électrique selon la revendication 1, **caractérisé en ce que** les brins sont des conducteurs électriques normaux.

**3.** Conducteur électrique selon la revendication 1, **caractérisé en ce que** les brins sont des supraconducteurs.

**4.** Conducteur électrique selon l'une des revendications 2 et 3, **caractérisé par** une couche diélectrique assurant l'isolation électrique entre les deux moitiés de conducteur rabattue l'une sur l'autre.

**5.** Conducteur électrique selon la revendication 4, **caractérisé en ce que** la structure de base du conducteur est un câble de Rutherford ou d'un câble de Roebel.

**6.** Conducteur électrique selon la revendication 5, **caractérisé en ce que** l'angle entre l'axe du conducteur/câble, non plié et l'axe d'un brin sur le côté opposé du conducteur est différent de sorte que les brins sur le coté intérieur du pli présentent une distance plus grande que ceux sur le côté extérieur du pli.

**Fig. 1**

**Fig. 2**

**Fig. 3**

**Fig. 4**

**Fig. 5**

**IN DER BESCHREIBUNG AUFGEFÜHRTE DOKUMENTE**

**In der Beschreibung aufgeführte Patentdokumente**

- DE 19754943 A